Europäisches Patentamt

European Patent Office

Office européen des brevets

(19)

(11) Numéro de publication: **0 263 219 B1**

(12) **FASCICULE DE BREVET EUROPEEN**

(45) Date de publication du fascicule du brevet:
21.03.90

(51) Int. Cl.⁴: **G01F 1/28, G01L 9/00**

(21) Numéro de dépôt: **86402245.4**

(22) Date de dépôt: **10.10.86**

(54) **Dispositif à jauges d'extensométrie pour la mesure d'efforts et/ou de couples.**

(43) Date de publication de la demande:
**13.04.88 Bulletin 88/15**

(45) Mention de la délivrance du brevet:
**21.03.90 Bulletin 90/12**

(84) Etats contractants désignés:
**BE CH DE GB IT LI LU NL**

(56) Documents cités:
**FR-A- 2 485 724**
**US-A- 3 354 716**

**Le dossier contient des informations techniques
présentées postérieurement au dépôt de la demande et
ne figurant pas dans le présent fascicule.**

(73) Titulaire: **SAPPEL Société Anonyme française, 67, rue du
Rhône, F-68304 Saint-Louis(FR)**

(72) Inventeur: **Roy, Daniel, 29 rue des Champs,
F-68300 Saint-Louis(FR)**

(74) Mandataire: **Cuer, André, CABINET CUER 30, rue de
Léningrad, F-75008 Paris(FR)**

ACTORUM AG

## Description

La présente invention concerne d'une façon générale les capteurs d'efforts ou de couples, du type à jauges d'extensométrie, et plus particulièrement un capteur d'efforts à jauges d'extensométrie conçu pour permettre la mesure d'efforts en milieu fluide agressif en ayant cependant une durée de vie très importante.

Un problème majeur lié à la mesure d'efforts ou de couple en milieu fluide, par exemple à des fins de surveillance du débit, réside dans le fait que les variations de pression, de température, et d'autres caractéristiques physiques de fluide perturbent la mesure d'une manière non négligeable.

Par ailleurs, lorsque le milieu fluide est agressif, corrosif, etc., il est nécessaire d'assurer l'immunité du capteur à ce milieu, de qui constitue parfois un problème insurmontable. Ainsi, les capteurs existants ont souvent une durée de vie limitée, ce qui impose leur remplacement fréquent.

La présente invention a pour objet de pallier ces inconvénients et de proposer un capteur d'efforts et/ou de couples, du type jauge d'extensométrie, dans lequel la mesure de l'effort puisse être effectuée avec une grande précision depuis une région physiquement isolée du milieu fluide.

Un autre objet de l'invention est de proposer un capteur d'efforts et/ou de couples dans lequel les perturbations de la mesure exercées par le fluide puissent être notablement atténuées.

Selon un procédé déjà connu (US-A 3 354 716) on a décrit un débitmètre associant sur une même sonde une mesure de pression, une mesure de température et une mesure de débit. Ces mesures sont effectuées par utilisation des jauges de déformation, de façon classique et la mesure d'effet est faite par une lame de flexion qui nécessite, lorsqu'on opère en milieu de fluide agressif, des séries de protections spécifiques qui vieillissent et se détériorent très rapidement.

Le but de l'invention est d'éviter ces isolations contraignantes et de proposer un capteur d'effort monobloc, rigide dans son ensemble et adapté pour être insensible à la pression du fluide environnant et donc aux variations de pression.

A cet effet, la présente invention concerne un dispositif capteur d'efforts et/ou de couples tel que exposé, selon sa définition générale, dans la revendication 1 qui suit la présente description

L'invention sera mieux comprise à la lecture de la descripiton détaillée suivante d'un mode de réalisation préféré de celle-ci, donnée à titre d'exemple non limitatif et faite en référence au dessin annexé, sur lequel:

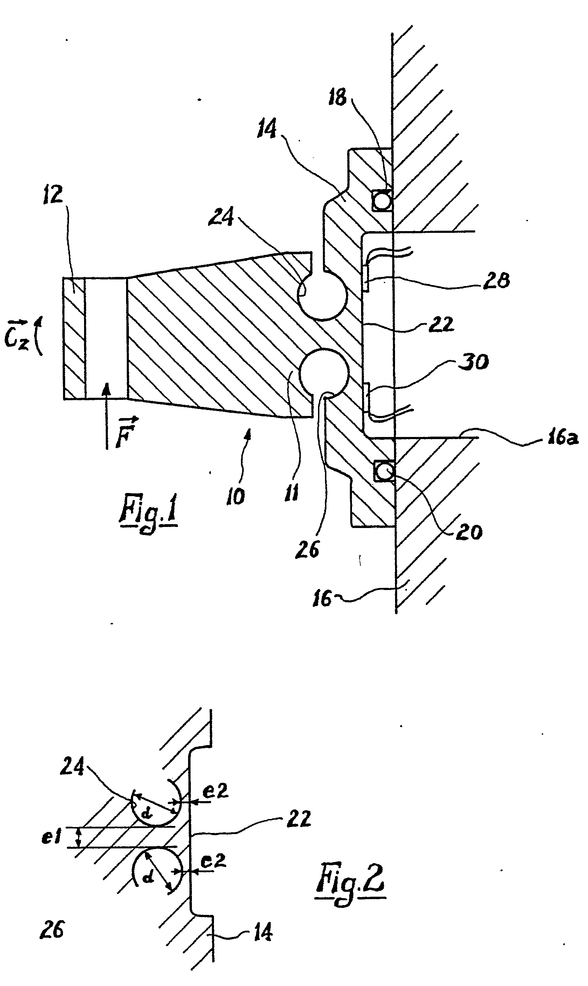

la figure 1 est une vue en coupe transversale d'un élément de capteur d'efforts et/ou de couples conforme à la présente invention, et
la figure 2 est une vue de détail de l'élément de la figure 1.

En référence au dessin, le dispositif capteur d'efforts comprend tout d'abord une poutre ou profilé, globalement indiqué en 10, qui est apte à recevoir une force F ou un couple Cz à son extrémité libre 12. L'extrémité opposée de la poutre 10 se présente sous la forme d'un socle rigide unitaire 14. Le socle 14 est destiné à la fixation de l'élément par exemple sur la paroi 16 d'un conduit acheminant un fluide agressif. Cette fixation pourra être assurée à l'aide de boulons appropriés (non représentés). On réalisera la poutre 10 de préférence en un métal ayant de bonnes caractéristiques d'élasticité et résistant au milieu fluide agressif.

Par ailleurs, dans la surface latérale du socle 14 qui est tournée vers la paroi 16 est formée une gorge circulaire 18 qui reçoit un joint torique 20. On assure ainsi l'étanchéité entre le milieu fluide et la région, ainsi isolée dudit milieu, dans laquelle aura lieu, comme décrit plus loin, la mesure d'un effort et/ou d'un couple agissant sur l'extrémité libre 12 de la poutre 10.

En outre, la paroi 16 présente dans la région de la fixation sus-mentionnée une ouverture 16a. On dégage ainsi une partie de la face verticale d'extrémité de l'élément 10, et cette partie est, dans le présent exemple, creusée à la même dimension que ladite ouverture 16a. Le fond 22 de la partie creusée, isolée du milieu fluide, tient lieu de plan de mesure dans lequel aura lieu la mesure de l'effort et/ou du couple. A cet effet, on fixera au fond de la partie creusée deux éléments capteurs (28,30) fonctionnant selon un principe résistif, du type jauge d'extensométrie conventionnelle. Ces éléments n'étant pas soumis à l'action du fluide, leur durée de vie pourra être extrêmement longue, tout en leur conservant une conception traditionnelle.

Selon l'invention, on a réalisé dans une région intermédiaire 11 de la poutre 10 deux perçages cylindriques 24,26 ouverts extérieurement et s'étendant parallèlement au plan de mesure, symétriquement par rapport à ce dernier.

L'expérience a démontré qu'une telle configuration permettait le transfert des déformations en flexion de la partie d'extrémité 12 de la poutre 10 vers le plan de mesure 22, où ces déformations sont converties en contraintes internes en compression et en traction, concentrées dans les zones bien définies dudit plan de mesure. En outre, du fait de la forme symétrique de l'élément capteur décrit, les efforts exercés sur la poutre 10 engendrent sur le plan de mesure deux zones de forte déformabilité, respectivement positive et négative. C'est en ces emplacements précis de ces deux zones que l'on disposera les éléments de mesure proprement-dits.

Par ailleurs, la grande rigidité de l'élément 10 en torsion lui confère une très faible déformation transversale (perpendiculairement au plan du dessin). On évite ainsi les phénomènes vibratoires de couplage en flexion/torsion. En outre, la forme de l'élément est telle qu'il présente une très grande rigidité vis à vis d'efforts ou de couples s'exerçant dans des directions perpendiculaires à celle de l'effort ou du couple mesuré. La forme de l'élément 10 telle que définie permet cependant un taux de déformabilité important dans la direction de l'effort mesuré, au profit de la sensibilité.

En référence à la figure 2, on a observé que les caractéristiques de transfert de l'élément de capteur de l'invention dépendaient fortement d'un certain nombre de paramètres géométriques de la poutre 10, à savoir:

- l'espacement e1 entre les deux perçages 24 et 26,
- le diamètre d commun aux deux perçages, et
- l'espacement e2 entre les perçages 24 et 26 et le plan de mesure ou fond du creusage 22.

Pour le moment, des essais ont démontré que l'on obtenait des résultats intéressants en matière de fidélité et d'amplitude de la mesure en fixant e1=d/2 et e2-e1/2.

Ces conclusions revêtent cependant un caractère provisoire.

En ce qui concerne le positionnement des jauges d'extensométrie sur le plan de mesure 22, les essais ont permis de localiser deux zones de déformabilités maximales opposées. Plus précisément, les contraintes internes en compression/traction existant respectivement dans ces deux zones sous l'influence d'un effort F à mesurer sont de signes opposés, tandis que les effets dûs aux variations de température et de pression du milieu fluide dans lequel est effectuée la mesure s'exercent indentiquement dans ces deux zones. Ainsi l'on comprend qu'en raccordant les deux jauges (ou quatre jauges pour une sensibilité maximale) dans un montage en pont résistif, on obtient les trois avantages suivants:

(a) les effets de température s'auto-compensent,
(b) les déformations dues à la pression sont éliminées, et
(c) le signal de sortie est amplifié.

Ainsi, l'invention permet avantageusement de réaliser des mesures d'efforts et/ou de couples en milieu fluide agressif en reportant les contraintes dans une région totalement isolée dudit milieu, et en plaçant des jauges d'extensométrie selon une disposition appropriée dans cette région isolée. On supprime ainsi les effets de vieillissement conventionnels dans ce genre d'application. Et comme on l'a dit, on élimine les perturbations de mesure dues aux écarts de température et de pression du milieu, inévitables avec les dispositifs de mesure de l'art antérieur.

On notera que l'invention s'appliquera avantageusement à la mesure du débit dans des conduits acheminant un fluide.

Enfin la présente invention n'est pas limitée au mode de réalisation décrit, mais inclut dans son cadre toute variante ou modification que pourra y apporter l'homme de l'art. En particulier, les formes dimensions, matériaux, etc. utilisés pour les éléments pourront être très divers.

**Revendications**

1. Dispositif capteur d'efforts et/ou de couple, destiné en particulier à la mesure d'efforts et/ou de couples dans un milieu fluide agressif circulant dans un conduit, comprenant

un élément en forme de poutre symétrique (10) s'étendant à l'intérieur du conduit caractérisé en ce que cette poutre comporte une extrémité libre (12) destinée à recevoir l'effort et/ou le couple à mesurer, un socle rigide (14) destiné à être fixé sur la face intérieure d'une paroi (16) dudit conduit, dans la région d'une ouverture (16a) de ladite paroi, en contact avec le fluide, et une partie intermédiaire (11) dans laquelle sont formées deux ouvertures longitudinales (24,26) ouvertes sur l'extérieur, et que

au moins deux éléments capteurs de type jauge d'extensométrie (28,30) sont disposés dans deux régions distinctes d'un plan de mesure (22) constitué d'au moins une partie de la face du socle (14) ouverte sur l'extérieur via ladite ouverture (16a) de la paroi (16),

de telle sorte qu'une flexion de l'extrémité libre (12) et de la partie intermédiaire (11) de la poutre (10), provoquée par l'effort et/ou le couple à mesurer, soit convertie en des contraintes internes respectivement en compression et en traction ayant sensiblement la même amplitude dans les régions dans lequelles sont disposés les éléments capteurs.

2. Dispositif selon la revendication 1, caractérisé en ce que les ouvertures longitudinales (24,26) consistent en des perçages cylindriques.

3. Dispositif selon l'une quelconque des revendications 1 et 2, caractérisé en ce que les jauges d'extensométrie (28,30) sont incluses dans un montage électrique de mesure en pont.

4. Dispositif selon l'une quelconque des revendications 1 à 3, caractérisé en ce que des moyens d'étanchéité (20) sont en outre prévus entre les faces adjacentes respectives du socle (14) et de la paroi (16) du conduit.

**Patentansprüche**

1. Meßvorrichtung zur Messung von Kräften und/oder Momenten insbesondere für die Kraft- und/oder Momentenmessung in einer aggressiven Flüssigkeit, die in einer Leitung zirkuliert, umfassend ein Element in Form eines symmetrischen Trägers (10), der sich in das Innere der Leitung erstreckt, dadurch gekennzeichnet, daß der Träger (10) ein freies Ende (12) zum Aufnehmen der zu messenden Kraft und/oder des zu messenden Momentes, einen starren Sockel (14) zum Befestigen an der Innenfläche einer Wand (16) der Leitung im Bereich einer Öffnung (16a) dieser Wand in Kontakt mit der Flüssigkeit und einen Zwischenteil (11) aufweist, in welchem zwei längliche Öffnungen (24, 26) ausgebildet sind, die nach außen offen sind und daß zumindest zwei Meßfühler nach Art von Dehnungsmeßstreifen (28, 30) an zwei unterschiedlichen Bereichen einer Meßebene (22) angeordnet sind, die zumindest einen Teil der Fläche des Sockels (14) bildet, der über die Öffnung (16a) der Wand (16) nach außen offen ist, derart, daß eine Biegung des freien Endes (12) und des Zwischenstückes (11) des Trägers (10), hervorgerufen durch die zu messende Kraft und/oder das zu messende Moment, umgewandelt wird in innere Beanspruchungen bzw. in Druck und Zug, die in den Bereichen, in denen die Meßelemente angeordnet sind, genau die gleiche Größe haben.

2. Meßvorrichtung nach Anspruch 1, dadurch gekennzeichnet daß die länglichen Öffnungen (24, 26) durch zylindrische Bohrungen gebildet sind.

3. Meßvorrichtung nach Anspruch 1 oder 2, dadurch gekennzeichnet, daß die Dehnungsmeßstreifen (28, 30) in eine elektrische Brückenschaltung einbezogen sind.

4. Meßvorrichtung nach einem der Ansprüche 1 bis 3, dadurch gekennzeichnet, daß außerdem Dichtungen (20) zwischen den benachbarten Flächen des Sockels (14) und der Wand (16) der Leitung vorgesehen sind.

## Claims

1. Device for sensing forces and/or torques, usable namely for measuring forces and/or torques in an aggressive fluid medium circulating in a pipe, of type comprising an element in the shape of a symmetrical beam (10) extending inside the pipe, characterized in that the said beam comprise: a free end (12) to receive the force and/or torque to be measured; a rigid base (14) fastened to the inside face of a wall (16) of said pipe, in the region of an opening (16a) of said wall in contact with the fluid; and an intermediate part (11) in which two longitudinal openings (24, 26) open to the outside are formed; and that at least two sensing elements of the strain gauge type (28, 30) placed in two separate regions of a measurement plane (22) consisting of at least a part of the face of said base (14) open to the outside via said opening (16a) in the wall (16), so that a bending of the free end (12) and of the intermediate part (11) of the beam (10) caused by the force and/or torque to be measured, is converted into internal stresses respectively of compression and of tension having approximately the same amplitude in the regions in which the sensing elements are placed.

2. A device according to claim 1, wherein the longitudinal openings (24, 26) consist of cylindrical holes.

3. A device according anyone of the claims 1 and 2, wherein the strain gauges, (28, 30) are included in a bridge measuring electric circuit.

4. A device according anyone of the claims 1 to 3 wherein means (20) for providing fluid thightness are provided between the adjacent faces respectively of the base (14) and of the wall (16) of the pipe.

EP 0 263 219 B1

*Fig.1*

*Fig.2*